# EUROPÄISCHE PATENTSCHRIFT

(11) **EP 1 446 216 B1**
(45) Veröffentlichungstag und Bekanntmachung des Hinweises auf die Patenterteilung: **02.03.2005**
(21) Anmeldenummer: 02787753.9
(22) Anmeldetag: 21.11.2002
(51) Int. Cl.: B01D 53/06, B01D 53/26, B01D 53/28, F24F 3/147

(54) **SORPTIONSROTOR**
SORPTION ROTOR
ROTOR DE SORPTION

(30) Priorität: 23.11.2001 DE 10157550
(43) Veröffentlichungstag der Anmeldung: 18.08.2004
(73) Patentinhaber: Klingenburg GmbH, 45968 Gladbeck (DE)
(72) Erfinder: KLINGENBURG, Hans, 45239 Essen (DE); CAO, Jing, 03044 Cottbus (DE); SIEBER, Heino, 91052 Erlangen (DE); GREIL, Peter, 91085 Weisendorf (DE); WESTERDORF, Thomas, 44795 Bochum (DE)
(74) Vertreter: Lelgemann, Karl-Heinz
(86) Internationale Anmeldenummer: PCT/EP2002/013050
(87) Internationale Veröffentlichungsnummer: WO 2003/043719

(56) Entgegenhaltungen:
- EP-A- 0 492 879
- EP-A- 0 594 360
- US-A- 3 419 937
- US-A- 4 093 435
- US-A- 5 439 868
- US-A- 5 685 897

## Beschreibung

Die Erfindung bezieht sich auf einen Sorptionsrotor, der drehbar gelagert ist, dessen Stirnfläche einen Anström- und einen Abströmsektor aufweist, die der Sorptionsrotor bei einer Drehung durchläuft, und der eine Werkstoffmatrix aufweist, die eine Wabenstruktur mit den Sorptionsrotor axial durchsetzenden Strömungskanälen ausbildet.

Derartige Sorptionsrotoren können - neben der Trocknung durch Kühlung und Kondensation - zur Luftentfeuchtung eingesetzt werden. Sie sind so behandelt, dass sie der sie durchströmenden Luft Feuchtigkeit entziehen. In einem abgetrennten Sektor, durch den sich der Sorptionsrotor bei seiner Drehbewegung hindurchbewegt, wird die in ihm gespeicherte Feuchtigkeit unter Wärmezufuhr ausgetrieben, wodurch der Sorptionsrotor zur erneuten Feuchtigkeitsaufnahme regeneriert wird.

Die die Wabenstruktur aufweisenden Sorptionsrotoren arbeiten bei nicht unerheblichen Temperatur- und Feuchtigkeitsschwankungen, wodurch Schäden an der die Wabenstruktur ausbildenden Werkstoffmatrix, die die Speichermasse bildet, entstehen können. Derartige Sorptionsrotoren können daher nur in vergleichsweise engen Temperatur- und Feuchtigkeitsbereichen eingesetzt werden. Diese für den geregelten Betrieb vorgegebenen Temperatur- und Feuchtigkeitsbereiche lassen sich in der Praxis nur unter besonderen Schwierigkeiten einhalten. Ein Betrieb derartiger Sorptionsrotoren in tropischen Regionen ist nicht möglich.

Des weiteren wird die Werkstoffmatrix des Sorptionsrotors, mit einer Lithiumchloridlösung behandelt, wodurch die Oberfläche hygroskopischer wirkt und wodurch eine antibakterielle Wirkung erzielt wird. Wenn ein derartiger Sorptionsrotor außerhalb der optimalen Betriebsbedingungen arbeitet, tritt der Effekt auf, dass Lithiumchlorid in fester oder flüssiger Form aus der Werkstoffmatrix ausgetragen wird. Dieser Effekt wirkt stark korrosiv auf die nachfolgenden Geräteeinbauten.

Die Regenerationstemperatur der vorstehend geschilderten Sorptionsrotoren ist auf max. 70 Grad C begrenzt, so dass derartige Sorptionsrotoren in der-industriellen Entfeuchtung nicht oder nur in einem äußerst geringen Umfang eingesetzt werden können.

Der Erfindung liegt die Aufgabe zugrunde, einen Sorptionsrotor der eingangs geschilderten Art zu schaffen, der über eine im Vergleich zum Stand der Technik erheblich erhöhte thermische Stabilität und Festigkeit, über eine gute Thermoschockbeständigkeit und eine hohe Formstabilität verfügt und der dennoch mit einem vergleichsweise geringen wirtschaftlichen Aufwand herstellbar ist.

Diese Aufgabe wird erfindungsgemäß dadurch gelöst, dass die Werkstoffmatrix des Sorptionsrotors aus Zellulosepapier ausgebildet und mittels keramischer Materialien modifiziert wird. Das die Werkstoffmatrix des Sorptionsrotors ausbildende Zellulosepapier kann erfindungsgemäß dergestalt mit keramischen Precursoren modifiziert werden, dass es bis zu einer Temperatur von mindestens 150 Grad C stabil ist und bei einem Langzeiteinsatz unter ständigen Temperatur- und Feuchtigkeitsschwankungen keine Formänderungen aufweist. Des weiteren wird eine sehr poröse hygroskopische Oberfläche mit definierter Porenstruktur des die Werkstoffmatrix ausbildenden Zellulosepapiers erreicht. Entsprechend kann der erfindungsgemäße Sorptionsrotor mit einer hohen Leistung und mit einer stabilen Struktur mit geringem wirtschaftlichen Aufwand hergestellt werden.

Wenn die Einsatzbedingungen maximale Einsatztemperaturen bis 150 Grad C vorsehen, kann die aus Zellulosepapier bestehende Werkstoffmatrix des Sorptionsrotors mittels eines sog. Sol-Gel-Prozesses mit den erforderlichen Eigenschaften versehen werden.

Hierbei wird die aus Zellulosepapier bestehende Werkstoffmatrix des Sorptionsrotors mit einem Sol-Gel-System bzw. einer gelbildenden, niedrigviskosen Flüssigkeit infiltriert, das bzw. die SiO₂, Al₂O₃ und/oder TiO₂ enthalten kann.

Der Einsatz von SiO₂ im Sol-Gel-System führt zu einer hohen spezifischen Oberfläche des die Werkstoffmatrix bildenden Zellulosepapiers; der Einsatz von Al₂O₃ im Sol-Gel-System hat eine hohe mechanische Festigkeit der Werkstoffmatrix zur Folge. Durch TiO₂ im Sol-Gel-System ergibt sich eine Modifizierung der SiO₂- und Al₂O₃-Systeme und darüber hinaus eine erwünschte antibakterielle Wirkung.

Eine besonders vorteilhafte Ausführungsform des erfindungsgemäßen Sorptionsrotors ist erreichbar, wenn die aus Zellulosepapier ausgebildete Werkstoffmatrix mit einer gelbildenden, niedrigviskosen Flüssigkeit bzw. einem Sol-Gel-System infiltriert ist, die bzw. das neben den keramischen Materialien adsorptiv wirkende Feststoffe, vorzugsweise Zeolithe, enthält.

Nach der Tränkung in dem für den jeweils vorgegebenen Anwendungszweck geeigneten Sol-Gel-System bzw. nach der Infiltration mit diesem Sol-Gel-System, die bei Raumtemperatur erfolgen kann, wird die Werkstoffmatrix bei einer Temperatur zwischen 100 Grad C und 200 Grad C getrocknet.

Der pH-Wert und die Temperatur bei der Infiltration sowie der Trocknungsverlauf werden zweckmäßigerweise so gewählt bzw. eingestellt, dass eine hohe Wasserdampfadsorption ermöglichende definierte Porenstruktur an der Werkstoffmatrix erzeugt wird.

Die das Zellulosepapier bildenden Zellulosefasern sind bis max. 180 Grad C stabil, wobei sie ab einer Temperatur von 120 Grad C starke Verfärbungen zeigen. Diese Grundfestigkeit des Zellulosepapiers wird durch die vorstehend geschilderte keramische Modifizierung von der keramischen Phase weiter stabilisiert. Da jedoch das das Ausgangsmaterial bildende Zellulosepapier in seiner ursprünglichen Form erhalten bleibt, sind auch die - wie vorstehend geschildert - ausgebildeten bzw. hergestellten Sorptionsrotoren nicht in allen wünschbaren Temperatur- und Feuchtigkeitsbereichen einsetzbar.

Eine erhebliche Verbreiterung des Einsatzbereichs der vorstehend geschilderten Rotorwärmetauscher bzw. der zu ihnen gehörenden Sorptionsrotoren läßt sich erreichen, wenn die Werkstoffmatrix, die die Wabenstruktur des Sorptionsrotors bildet, zu einer selbsttragenden Verbundkeramik gesintert wird. Diese Sinterung kann bei Temperaturen von oberhalb 800 Grad C, vorzugsweise bei ca. 850 Grad C, an Luft vorgenommen werden. Hierdurch läßt sich mit einem vergleichsweise geringen wirtschaftlichen Aufwand eine werkstoffmäßige Ausgestaltung der den Soprtionsrotor bildenden Werkstoffmatrix erzielen, die in einem Temperaturbereich weit über 150 Grad C einsetzbar ist, wobei auch bisher nicht erreichbare Feuchtigkeitsbereiche abgedeckt werden können. Ein derartiger Sorptionsrotor ist auch für industrielle Zwecke in großem Ausmaß einsetzbar.

Wenn für bestimmte Einsatzzwecke und Anforderungsprofile die Festigkeitseigenschaften der selbsttragenden Verbundkeramik noch nicht ausreichend sind, ist es möglich, durch einen weiteren Sintervorgang die in der Werkstoffmatrix enthaltenen Kohlenstoffanteile mit Silizium zu einer SiC-Keramik umzusetzen. Dieser Sintervorgang wird als Inertgasbehandlung bei Temperaturen oberhalb von 800 Grad C durchgeführt.

Auch bei der vorstehend geschilderten Umsetzung der Werkstoffmatrix, die hierdurch einen vollkeramischen Charakter erhält, werden in den Oberflächen der Werkstoffmatrix feinste Poren erzeugt.

Falls diese Poren in bestimmten Einsatzfällen keine ausreichende Wasserdampfadsorption ermöglichen, ist es zweckmäßig, wenn die gesinterte Werkstoffmatrix erneut mit einem Sol-Gel-System nachinfiltriert und dann nachgetrocknet wird.

Zur Erzielung einer antibakteriellen Wirkung können die vorstehend geschilderten Ausführungsformen einer Werkstoffmatrix des erfindungsgemäßen Sorptionsrotors mit inhibiertem Lithiumchlorid beschichtet werden.

Alternativ ist es möglich, zwecks Keimtötung der gelbildenden, niedrigviskosen Flüssigkeit bzw. dem Sol-Gel-System, mit dem die aus Zellulosepapier ausgebildete Werkstoffmatrix infiltriert wird, biozid wirkende, fest einbindbare Feststoffe beizugeben. Hierbei haben sich als besonders vorteilhaft einzusetzende Feststoffe Amina T100 und Limago T100 erwiesen, wobei die genannten Bezeichnungen eingetragene Marken der CREAVIS Gesellschaft für Technologie und Innovation mbH sind.

Der vorstehend geschilderte erfindungsgemäße Sorptionsrotor lässt sich mit einem vergleichsweise geringen technischen und wirtschaftlichen Aufwand gemäß einem der Patentansprüche 15 bis 25 herstellen.

Im folgenden wird die Erfindung anhand einer Ausführungsform unter Bezugnahme auf die Zeichnung näher erläutert.

Es zeigen:
- Figur 1: eine Ansicht eines erfindungsgemäßen Sorptionsrotors; und
- Figur 2: den Ausschnitt A aus Figur 1.

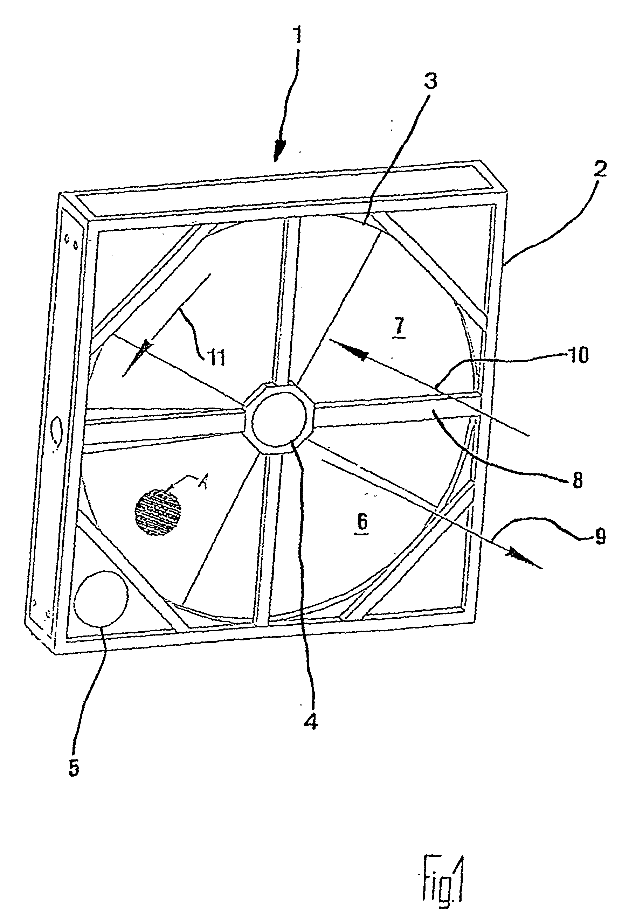

Eine in Figur 1 in perspektivischer Ansicht dargestellte Luftentfeuchtungseinrichtung 1 hat einen in der dargestellten Ausführungsform etwa quadratischen Rahmen 2.

Innerhalb des etwa quadratischen Rahmens 2 ist ein Sorptionsrotor 3 um eine Nabe 4 drehbar angeordnet. Als Antrieb für die Drehbewegung des Sorptionsrotors 3 dient ein Motor 5.

Eine Stirn- bzw. Strömungsquerschnittfläche des Sorptionsrotors 3 gliedert sich in einen Anströmsektor 6 und einen Abströmsektor 7. In der dargestellten Ausführungsform ist der Anströmsektor 6 unterhalb eines Horizontalträgers 8 ausgebildet, der zwei einander gegenüberliegende Seiten des Rahmens 2 miteinander verbindet. Der Abströmsektor 7 ist oberhalb dieses Horizontalträgers 8 ausgebildet.

Der Anströmsektor 6 der Luftentfeuchtungseinrichtung 1 wird von einem Prozess-/Zuluftstrom 9 durchströmt, während der Abströmsektor 7 der Luftentfeuchtungseinrichtung 1 durch einen Regenerationsluftstrom 10 durchströmt wird.

Während der Sorptionsrotor 3 - getrieben durch den Motor 5 der durch den Pfeil 11 dargestellten Drehrichtung - den Anströmsektor 6 durchläuft, entzieht er dem Prozess/Zuluftstrom 9 Luftfeuchtigkeit. Die Prozess/Zulufttemperatur wird dadurch erhöht. Die Feuchtigkeit wird im Sorptionsrotor 3 durch Anlagerung auf den Oberflächen desselben gespeichert. Wenn der Sorptionsrotor 3 den Abströmsektor 7 durchläuft, wird die in ihm gespeicherte Feuchtigkeit durch den erwärmten Regenerationsluftstrom 10 ausgetrieben, wodurch der Sorptionsrotor 3 regeneriert wird.

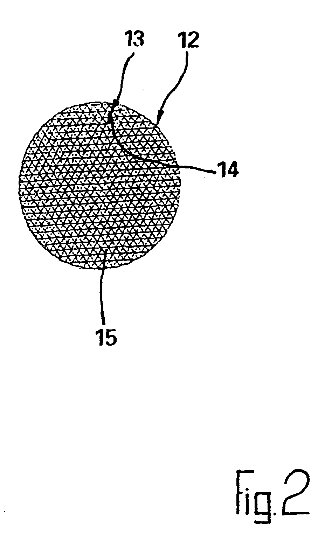

Der Sorptionsrotor 3 besteht aus einer Werkstoffmatrix 12 aus Zellulosepapier, deren grundsätzlicher Aufbau in Figur 2 dargestellt ist, die den Ausschnitt A des in Figur 1 dargestellten Sorptionsrotors 3 zeigt, aus dem - im Gegensatz zur Darstellung in Figur 1 - der detailgenaue Aufbau des Sorptionsrotors 3 hervorgeht. Die Werkstoffmatrix 12 besteht aus glattzylindrischen und geknickten, gewellten bzw. gefalteten Zellulosepapierfolien 13 bzw. 14, wobei jeweils eine geknickte, gewellte bzw. gefaltete Zellulosepapierfolie 13 mit zwei ebenen bzw. glattzylindrischen Zellulosepapierfolien 14 Strömungskanäle 15 ausbildet, die den Sorptionsrotor 3 bzw. dessen Werkstoffmatrix 12 in Strömungsrichtung durchsetzen.

Die Oberflächen der Zellulosepapierfolien 13, 14 haben eine kapillarische Struktur, wodurch die Luftfeuchtigkeit besser übertragbar ist. Des weiteren sind diese die Strömungskanäle 15 ausbildenden Oberflächen der Zellulosepapierfolien 13, 14 mit einer Lithiumchloridlösung behandelt, die beispielsweise 3 bis 13 Gew.-% Lithiumchlorid in Ethanol enthält. Als Lithiumchlorid wird inhibiertes Lithiumchlorid verwendet, dessen Inhibierungsmittel auf der Basis chromatierter Stoffe hergestellt sind oder das zwecks Inhibierung einen geringen Anteil Lithiumnitrat aufweist.

Vor der Behandlung mit der Lithiumchloridlösung wird die aus Zellulosepapier bestehende Werkstoffmatrix 12 mittels keramischer Materialien modifiziert. Sie wird mit einem Sol-Gel-System getränkt bzw. infiltriert, das SiO₂ und/oder Al₂O₃ und/oder TiO₂ und/oder Mullit enthalten kann. Die Infiltration der aus Zellulosepapier hergestellten Werkstoffmatrix 12 mit dem Sol-Gel-System erfolgt bei Raumtemperatur. Nach der Infiltration wird die mit dem Sol-Gel-System getränkte Werkstoffmatrix bei einer Temperatur zwischen 100 Grad C und 200 Grad C getrocknet.

Des weiteren kann das zur Infiltrierung der Werkstoffmatrix des Sorptionsrotors vorgesehene Sol-Gel-System bzw. die gelbildende, niedrigviskose Flüssigkeit adsorptiv wirkende Feststoffe in Form von Zeolithen enthalten; zur Erreichung der keimtötenden Wirkung ist es möglich, anstelle oder zusätzlich zu der Verwendung von Lithiumchlorid ein Sol-Gel-System bzw. eine gelbildende, niedrigviskose Flüssigkeit einzusetzen, die neben den bereits vorstehend erwähnten Komponenten biozid wirkende, fest einbindbare Feststoffe enthält, bei denen es sich z.B. um Amina T100 und/oder Limago T100 handeln kann, wobei es sich bei den letztgenannten Bezeichnungen um eingetragene Marken der CREAVIS Gesellschaft für Technologie und Innovation mbH handelt.

Der pH-Wert und die Temperatur bei der Infiltration sowie der Trocknungsverlauf werden so gewählt bzw. eingestellt, dass an den Oberflächen der aus Zellulosepapier bestehenden Werkstoffmatrix 12 eine definierte Porenstruktur entsteht, die eine hohe Wasserdampfadsorption ermöglicht.

Bei einer anderen Ausführungsform des erfindungsgemäßen Sorptionsrotors 3 wird die Werkstoffmatrix 12 zu einer selbsttragenden Verbundkeramik gesintert. Durch diese Sinterung kann eine Erhöhung der Temperatur- und der Feuchtigkeitsbeständigkeit der Struktur der Werkstoffmatrix 12 des Sorptionsrotors 3 erreicht werden.

Der Sintervorgang wird bei Temperaturen oberhalb von 800 Grad C, z.B. bei einer Temperatur von 850 Grad C, an Luft durchgeführt.

Wenn die so erreichten Festigkeitseigenschaften der Werkstoffmatrix 12 des Sorptionsrotors 3 für bestimmte Anforderungsprofil noch nicht ausreichend sind, ist es möglich, den Sintervorgang zweistufig zu gestalten, wobei als zweite Stufe des Sintervorgangs die Werkstoffmatrix bei Temperaturen oberhalb von 800 Grad C an Inertgas erneut gesintert wird, wobei in der Werkstoffmatrix 12 enthaltende Kohlenstoffanteile mit Silizium zu einer SiC-Keramik umgesetzt werden.

Durch den einen Sintervorgang bzw. die beiden Sintervorgänge wird die Werkstoffmatrix 12 des Sorptionsrotors 3 in eine Vollkeramik umgesetzt, wobei durch diese Umsetzung feinste Poren in den Oberflächen der Werkstoffstruktur 12 erzeugt werden. Für übliche Anwendungszwecke reichen die so erzeugten feinsten Poren für eine ausreichende Wasserdampfadsorption aus.

Falls dies in besonderen Einsatzfällen nicht zutrifft, muß die Werkstoffmatrix 12 einer Nachinfiltratiön mit dem vorstehend bereits geschilderten Sol-Gel-System und einer Nachtrocknung ausgesetzt werden.

## Patentansprüche

1. Sorptionsrotor (3), der drehbar gelagert ist, dessen Stirnfläche (6, 7) einen Anström- (6) und einen Abströmsektor (7) aufweist, die der Sorptionsrotor (3) bei einer Drehung durchläuft, und der eine Werkstoffmatrix (12) aufweist, die eine Wabenstruktur mit den Sorptionsrotor (3) axial durchsetzenden Strömungskanälen (15) ausbildet, **dadurch gekennzeichnet, dass** die Werkstoffmatrix (12) des Sorptionsrotors (3) aus Zellulosepapier ausgebildet und mittels keramischer Materialien aus einem Sol-Gel-System bzw. einer gelbildenden, niedrigviskosen Flüssigkeit infiltriert ist.

2. Sorptionsrotor nach Anspruch 1, dessen aus Zellulosepapier bestehende Werkstoffmatrix mit einem SiO₂ enthaltenden Sol-Gel-System infiltriert ist.

3. Sorptionsrotor nach Anspruch 1 oder 2, dessen aus Zellulosepapier bestehende Werkstoffmatrix (12) mit einem Al₂O₃ enthaltenden Sol-Gel-System infiltriert ist.

4. Sorptionsrotor nach einem der Ansprüche 1 bis 3, dessen aus Zellulosepapier bestehende Werkstoffmatrix (12) mit einem TiO₂ enthaltenden Sol-Gel-System infiltriert ist.

5. Sorptionsrotor nach einem der Ansprüche 1 bis 4, dessen aus Zellulosepapier ausgebildete Werkstoffmatrix (12) mit einer gelbildenden, niedrigviskosen Flüssigkeit bzw. einem Sol-Gel-System infiltriert ist, der bzw. dem adsorptiv wirkende Feststoffe beigegeben sind.

6. Sorptionsrotor nach Anspruch 5, bei dem als adsorptiv wirkende Feststoffe Zeolithe vorgesehen sind.

7. Sorptionsrotor nach einem der Ansprüche 1 bis 6, dessen mit dem Sol-Gel-System infiltrierte Werkstoffmatrix (12) getrocknet ist.

8. Sorptionsrotor nach einem der Ansprüche 1 bis 6, dessen mit dem Sol-Gel-System infiltrierte Werkstoffmatrix (12) zu einer selbsttragenden Verbundkeramik gesintert ist.

9. Sorptionsrotor nach Anspruch 8, in dessen zu einer selbsttragenden Verbundkeramik gesinterten Werkstoffmatrix (12) die Kohlenstoffanteile mit Silizium zu einer SiC-Keramik umgesetzt sind.

10. Sorptionsrotor nach Anspruch 8 oder 9, dessen zu einer selbsttragenden Verbundkeramik gesinterte Werkstoffmatrix (12), in der ggf. die Kohlenstoffanteile mit Silizium zu einer SiC-Keramik umgesetzt sind, mit einem Sol-Gel-System nachinfiltriert und nachgetrocknet ist.

11. Sorptionsrotor nach einem der Ansprüche 1 bis 10, dessen Werkstoffmatrix (12) mit inhibiertem Lithiumchlorid beschichtet ist.

12. Sorptionsrotor nach einem der Ansprüche 1 bis 11, dessen aus Zellulosepapier ausgebildete Werkstoffmatrix (12) mit einer gelbildenden, niedrigviskosen Flüssigkeit bzw. einem Sol-Gel-System infiltriert ist, der bzw. dem biozid wirkende, fest einbindbare Feststoffe beigegeben sind.

13. Sorptionsrotor nach Anspruch 12, bei dem als biozid wirkende, fest einbindbare Feststoffe Amina T100 und/oder Limago T100 (eingetragene Marken der CREAVIS Gesellschaft für Technologie und Innovation mbH) vorgesehen sind.

14. Verfahren zur Herstellung eines Sorptionsrotors (3), **dadurch gekennzeichnet, dass** eine Werkstoffmatrix (12) des Sorptionsrotors (3) aus Zellulosepapier erstellt und mittels keramischer Materialien aus einem Sol-Gel-System bzw. einer gelbildenden, niedrigviskosen Flüssigkeit infiltriert wird.

15. Verfahren nach Anspruch 14, bei dem die aus Zellulosepapier erstellte Werkstoffmatrix (12) mit einem SiO₂ und/oder Al₂O₃ und/oder TiO₂ enthaltenden Sol-Gel-System infiltriert wird.

16. Verfahren nach Anspruch 14 oder 15, bei dem die aus Zellulosepapier erstellte Werkstoffmatrix (12) mit einer gelbildenden, niedrigviskosen Flüssigkeit bzw. einem Sol-Gel-System infiltriert wird, der bzw. dem adsorptiv wirkende Feststoffe, insbesondere Zeolithe, beigegeben werden.

17. Verfahren nach einem der Ansprüche 14 bis 16, bei dem die aus Zellulosepapier erstellte Werkstoffmatrix (12) bei Raumtemperatur mit dem Sol-Gel-System infiltriert und bei einer Temperatur zwischen 100 Grad C und 200 Grad C getrocknet wird.

18. Verfahren nach einem der Ansprüche 14 bis 17, bei dem der pH-Wert und die Temperatur bei der Infiltration und der Trocknungsverlauf so gewählt bzw. eingestellt werden, dass eine eine hohe Wasserdampfadsorption ermöglichende definierte Porenstruktur an der Werkstoffmatrix (12) erzeugt werden.

19. Verfahren nach einem der Ansprüche 14 bis 16, bei dem die mit dem Sol-Gel-System infiltrierte Werkstoffmatrix (12) zu einer selbsttragenden Verbundkeramik gesintert wird.

20. Verfahren nach Anspruch 19, bei dem die mit dem Sol-Gel-System infiltrierte Werkstoffmatrix (12) bei Temperaturen oberhalb von 800 Grad C, z.B. bei 850 Grad C, an Luft gesintert wird.

21. Verfahren nach Anspruch 19 oder 20, bei dem die gesinterte Werkstoffmatrix (12) bei Temperaturen oberhalb von 800 Grad C an Inertgas gesintert wird, so dass in der Werkstoffmatrix (12) enthaltene Kohlenstoffanteile mit Silizium zu einer SiC-Keramik umgesetzt werden.

22. Verfahren nach einem der Ansprüche 19 bis 21, bei dem die gesinterte Werkstoffmatrix (12) mit einem Sol-Gel-System nachinfiltriert und nachgetrocknet wird.

23. Verfahren nach einem der Ansprüche 14 bis 22, bei dem die aus Zellulosepapier erstellte Werkstoffmatrix (12) mit einer gelbildenden, niedrigviskosen Flüssigkeit bzw. einem Sol-Gel-System infiltriert wird, der bzw. dem biozid wirkende, fest einbindbare Feststoffe, insbesondere Amina T100 und/oder Limago T100 (eingetragene Marken der CREAVIS Gesellschaft für Technologie und Innovation mbH) beigegeben werden.

## Claims

1. A sorption rotor (3), which is rotatably mounted, whose frontal surface (6, 7) includes an outflow (6) and an inflow sector (7), which the sorption rotor (3) passes through when turned, and which is equipped with a material matrix (12) that forms a honeycomb structure with flow channels (15) extending axially through the sorption rotor (3), **characterized in that** the material matrix (12) of the sorption rotor (3) is constructed from cellulose paper and is infiltrated by means of ceramic materials from a sol-gel system and/or a gel-forming, low-viscosity liquid.

2. The sorption rotor according to claim 1, whose existing material matrix of cellulose paper is infiltrated with a sol-gel system containing SiO₂.

3. The sorption rotor according to either of claims 1 or 2, whose existing material matrix (12) of cellulose paper is infiltrated with a sol-gel system containing Al₂O₃.

4. The sorption rotor according to any of claims 1 to 3, whose existing material matrix (12) of cellulose paper is infiltrated with a sol-gel system containing TiO₂.

5. The sorption rotor according to any of claims 1 to 4, whose material matrix (12) constructed from cellulose paper is infiltrated with a gel-forming, low-viscosity liquid or a sol-gel system, to which adsorptive solid materials have been added.

6. The sorption rotor according to claim 5, in which zeolites are provided as adsorptive solid materials.

7. The sorption rotor according to any of claims 1 to 6, whose material matrix (12) infiltrated with the sol-gel system is dried.

8. The sorption rotor according to any of claims 1 to 6, whose material matrix (12) infiltrated with the sol-gel system is sintered to a self-supporting, composite ceramic.

9. The sorption rotor according to claim 8, in whose material matrix (12) which has been sintered to a self-supporting composite ceramic the carbon components are reacted with silicon to form a SiC ceramic.

10. The sorption rotor according to either of claims 8 or 9, whose material matrix (12) which has been sintered to a self-supporting composite ceramic, and in which the carbon components may have been reacted with silicon to form a SiC ceramic, has been subsequently infiltrated with a sol-gel system and aired.

11. The sorption rotor according to any of claims 1 to 10, whose material matrix (12) is coated with inhibited lithium chloride.

12. The sorption rotor according to any of claims 1 to 11, whose material matrix (12) made from cellulose paper is infiltrated with a gel-forming, low-viscosity liquid or a sol-gel system, and to which biocidally active solids that are permanently bonding have been added.

13. The sorption rotor according to claim 12, in which Amina T100 and/or Limago T100 (registered brand names of CREAVIS Gesellschaft für Technologie und Innovation mbH) are provided as permanently bonding biocidally active solids.

14. A method for manufacturing a sorption rotor (3),
**characterised in that**
a material matrix (12) of the sorption rotor (3) is manufactured from cellulose paper and is infiltrated by means of ceramic materials from a sol-gel system and/or a gel-forming, low-viscosity liquid.

15. The method according to claim 14, in which the material matrix (12) manufactured from cellulose paper is infiltrated with a sol-gel system containing SiO₂ and/or Al₂O₃ and/or TiO₂.

16. The method according to either of claims 14 or 15, in which the material matrix (12) manufactured from cellulose paper is infiltrated with a gel-forming, low-viscosity liquid or a sol-gel system, to which solids with adsorptive function, particularly zeolites, are added.

17. The method according to any of claims 14 to 16, in which the material matrix (12) manufactured from cellulose paper is infiltrated with the sol-gel system at room temperature and is dried at a temperature between 100°C and 200°C.

18. The method according to any of claims 14 to 17, in which the pH and the temperature during infiltration and the drying process are selected or set such that a defined pore structure enabling high water vapour adsorption is created on the material matrix (12).

19. The method according to any of claims 14 to 16, in which the material matrix (12) that was infiltrated with the sol-gel system is sintered to form a self-supporting composite ceramic.

20. The method according to claim 19, in which the material matrix (12) that was infiltrated with the sol-gel system is sintered in air at temperatures above 800°C, for example at 850°C.

21. The method according to either of claims 19 or 20, in which the sintered material matrix (12) is sintered in an inert gas at temperatures above 800°C, so that carbon components contained in the material matrix (12) are reacted with silicon to form an SiC ceramic.

22. The method according to any of claims 19 to 21, in with the sintered material matrix (12) is subsequently infiltrated a sol-gel system and aired.

23. The method according to any of claims 14 to 22, in which the material matrix (12) manufactured from cellulose paper is infiltrated with a gel-forming, low-viscosity liquid or a sol-gel system, to which permanently bonding, biocidally active solids, particularly Amina T100 and/or Limago T100 (registered brand names of CREAVIS Gesellschaft für Technologie und Innovation mbH) are added.

## Revendications

1. Rotor de sorption (3), disposé de manière à entrer en rotation, dont la surface frontale (6,7) présente un secteur d'entrée de flux (6) et un secteur de sortie de flux (7), qui traverse le rotor de sorption (3) pendant une rotation, et qui présente une matrice de matériau (12), qui forme une structure à alvéoles avec les canaux d'écoulement (15) traversant axialement le rotor de sorption (3), **caractérisé en ce que** la matrice de matériau (12) du rotor de sorption (3) est constituée de papier cellulosique et est infiltrée au moyen des matériaux céramiques d'un système sol-gel, respectivement un liquide à faible viscosité, formant des gels.

2. Rotor de sorption selon la revendication 1, dont la matrice de matériau constituée de papier cellulosique est infiltrée par un système sol-gel contenant un SiO2.

3. Rotor de sorption selon la revendication 1 ou 2, dont la matrice de matériau (12) constituée de papier cellulosique est infiltrée par un système sol-gel contenant un Al2O3.

4. Rotor de sorption selon une des revendications 1 à 3, dont la matrice de matériau (12) constituée de papier cellulosique est infiltrée par un système sol-gel contenant un TiO2.

5. Rotor de sorption selon une des revendications 1 à 4, dont la matrice de matériau (12) constituée de papier cellulosique est infiltrée par un liquide à faible viscosité, formant des gels, respectivement un système sol-gel, auquel des matières solides à action adsorptive sont ajoutées.

6. Rotor de sorption selon la revendication 5, dans lequel de la zéolithe est utilisée comme matière solide à action adsorptive.

7. Rotor de sorption selon une des revendications 1 à 6, dont la matrice de matériau (12) infiltrée par le système sol-gel est séchée.

8. Rotor de sorption selon une des revendications 1 à 6, dont la matrice de matériau (12) infiltrée par le système sol-gel est frittée à une céramique composite auto-portante.

9. Rotor de sorption selon la revendication 8, dans la matrice de matériau (12) frittée à une céramique composite auto-portante duquel les portions de carbone sont converties avec le silicium en une céramique-SiC.

10. Rotor de sorption selon la revendication 8 ou 9, dont la matrice de matériau (12) frittée à une céramique composite auto-portante, dans laquelle, le cas échéant, les portions de carbone sont converties avec le silicium en une céramique-SiC, est à nouveau infiltrée par un système sol-gel et à nouveau séchée.

11. Rotor de sorption selon une des revendications 1 à 10, dont la matrice de matériau (12) est revêtue de chlorure de lithium inhibé.

12. Rotor de sorption selon une des revendications 1 à 11, dont la matrice de matériau (12) constituée de papier cellulosique est infiltrée par un liquide à faible viscosité, formant des gels, respectivement un système sol-gel, auquel des matières solides à action biocide, reliées solidement sont ajoutées.

13. Rotor de sorption selon la revendication 12, dans lequel, comme matière solide à action biocide, reliée solidement, du Amina T100 et/ou du Limago T100 (marques déposées de la Société CREAVIS pour la Technologie et l'Innovation mbH) sont prévus.

14. Procédé de fabrication d'un rotor de sorption (3), **caractérisé en ce que** une matrice de matériau (12) du rotor de sorption (3) est élaborée dans du papier cellulosique et est infiltrée au moyen des matériaux céramiques d'un système sol-gel, respectivement un liquide à faible viscosité, formant des gels.

15. Procédé selon la revendication 14, dans lequel la matrice de matériau (12) constituée de papier cellulosique est infiltrée par un système sol-gel contenant un SiO2 et/ou Al2O3 et/ou TiO2.

16. Procédé selon la revendication 14 ou 15, dans lequel la matrice de matériau (12) constituée de papier cellulosique est infiltrée par un liquide à faible viscosité, formant des gels, respectivement un système sol-gel, auquel des matières solides à action adsorptive, notamment de la zéolithe, sont ajoutées.

17. Procédé selon une des revendications 14 à 16, dans lequel la matrice de matériau (12) constituée de papier cellulosique est infiltrée par le système sol-gel à une température de pièce et est séché à une température comprise entre 100°C et 200°C.

18. Procédé selon une des revendications 14 à 17, dans lequel la valeur de pH et la température lors de l'infiltration et du processus de séchage sont sélectionnées, respectivement réglées de telle sorte qu'une structure à pores définie sur la matrice de matériau (12), permettant une adsorption élevée de la valeur d'eau soit produite.

19. Procédé selon une des revendications 14 à 16, dans lequel la matrice de matériau (12) infiltrée par le système sol-gel est frittée à une céramique composite auto-portante.

20. Procédé selon la revendication 19, dans lequel la matrice de matériau (12) infiltrée par le système sol-gel est frittée à l'air à des températures supérieures à 800°C, par exemple à 850°C.

21. Procédé selon la revendication 19 ou 20, dans lequel la matrice de matériau (12) frittée est frittée au gaz inerte à des températures supérieures à 800°C, de telle sorte que les portions de carbone contenues dans la matrice de matériau (12) soient converties avec du silicium en une céramique-SiC.

22. Procédé selon une des revendications 19 à 21, dans lequel la matrice de matériau (12) frittée est à nouveau infiltrée par un système sol-gel et à nouveau séchée.

23. Procédé selon une des revendications 14 à 22, dans lequel la matrice de matériau (12) constituée de papier cellulosique est infiltrée par un liquide à faible viscosité, formant des gels, respectivement un système sol-gel, auquel sont ajoutées des matières solides à action biocide, solidement reliées, notamment du Amina T100 et/ou du Limago T100 (marques déposées de la Société CREAVIS pour la Technologie et l'Innovation mbH).
